# EUROPEAN PATENT APPLICATION

(11) **EP 1 065 765 A2**
(43) Date of publication of application: **03.01.2001**
(21) Application number: 00305431.9
(22) Date of filing: 28.06.2000
(51) Int. Cl.: H01S 5/026

(54) **Optical semiconductor device and optical communication system**

(30) Priority: 28.06.1999 JP 18188799
(71) Applicant: NEC CORPORATION, Tokyo (JP)
(72) Inventor: Furushima, Yuji, Tokyo (JP)
(74) Representative: Cozens, Paul Dennis

(57) **Abstract**

In an electro-absorption (EA) type of optical modulator using a variation of a quantum level light-emission wavelength caused by an application of an electric field to an absorption layer having a multiple quantum well (MQW) structure, quantum well layers in the MQW absorption layer are varied in thickness or in composition to make a quantum level light-emission wavelength at zero-bias voltage be shorter in a quantum well located in a portion subjected to a weak electric field. This structure unifies extinction curves of quantum wells when a reverse bias voltage is applied to them in order to maintain the enhanced non-linearity of the extinction curve which a single quantum well originally has, and accordingly realizes an EA optical modulator which has a large extinction ratio and an extinction curve with an enhanced non-linearity.

## Description

### BACKGROUND OF THE INVENTION

### Field of the Invention:

The present invention relates to an optical semiconductor device and optical communication system mainly used in optical communications. More particularly, the present invention relates to an optical semiconductor device and optical communication system having an optical semiconductor modulator of electro-absorption type.

### Description of the Related Art:

Various optical semiconductor devices and optical modulators have been studied and developed as light sources for long-distance large-capacity optical fiber communication systems. The light sources for use in fast long-distance communications include a distributed feedback laser diode (DFB-LD) and a distributed Bragg reflector laser diode (DBR-LD) that can achieve a single axial mode oscillation.

In a direct modulation method that modulates a drive current for the semiconductor laser, when a fluctuation occurs in a refractive index of the laser medium due to fluctuations in injected carriers, there is caused a variation in an oscillation spectrum, that is, a dynamic wavelength chirping. The wavelength chirping is a factor that restricts a transmission distance in the fast modulation. Therefore, mainly used for a fast long-distance communication at several Gb/s is an external modulation method which modulates a light from a semiconductor laser while it continuously oscillates, using an external optical modulator.

The semiconductor optical modulators includes an electro-absorption (EA) type that employs a wavelength variation at an absorption end caused by an electric field application, and a Mach-Zehnder type that employs a refractive index variation caused by a voltage application. The EA modulator has a simple structure and can be easily integrated monolithically with other semiconductor devices such as the DFB-LD. If an optical semiconductor device contains the EA modulator along with a light emission device monolithically integrated to form an EA modulator integrated semiconductor optical element, it is possible to have excellent fast long-distance transmission characteristics. Practically, it serves as a light source that can realize a miniaturized optical module with a low cost, low power consumption and high reliability.

Fig. 15 shows a device structure of a first conventional EA optical modulator that employs an absorption layer of multiple quantum well (MQW) structure for a band of 1.55 µm wavelength.

In the EA optical modulator, grown on an n-InP substrate 1 are an n-InP clad layer 2, an MQW absorption layer 3, a p-InP clad layer 4 and a p-InGaAs cap layer 5. A mesa stripe is formed by etching for lateral mode control and is buried within an InP semi-insulator 6. This modulator has a device length of 450 µm. Non-reflective coatings of SiN (not depicted) are applied on the end surfaces for optical input/output.

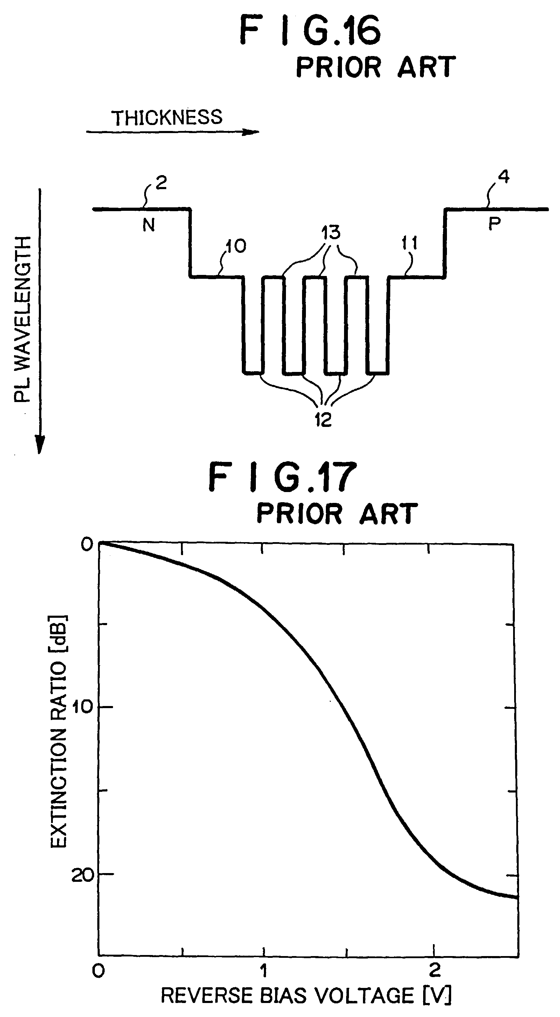

Fig. 16 conceptually shows the layer structure of the MQW absorption layer 3 with photoluminescence (PL) wavelengths. In Fig. 16, reference 10, 11, 12, and 13 represent n-side SCH layer, p-side SCH layer, quantum well layers, and barrier layers, respectively. The MQW absorption layer 3 includes an n-InGaAsP separate confinement heterostructure (SCH) layer 10 (PL wavelength 1.25 µm composition, thickness 50 nm, carrier concentration 1 × 10¹⁸ cm⁻³) and a p-InGaAsP SCH layer 11 (PL wavelength 1.25 µm composition, thickness 50 nm, carrier concentration 3 × 10¹⁷ cm⁻³). Four non-doped InGaAsP quantum well layers 12 (PL wavelength 1.58 µm composition, thickness 8 nm) and three non-doped InGaAsP barrier layers 13 (PL wavelength 1.25 µm composition, thickness 10 nm) are alternately grown between the layers 10 and 11. This MQW absorption layer 3 has a quantum level light-emission wavelength of 1.50 µm at zero-bias voltage.

Fig. 17 shows a relationship between an applied voltage and an extinction ratio, that is, an extinction curve, when a light with a wavelength of 1.550 µm enters the above EA optical modulator. The extinction ratio is defined as a fraction of an optical output at zero-bias voltage over an optical output at a voltage application. The quantum-confined Stark effect (QCSE) makes excitons have longer wavelengths at their absorption peaks when a reverse bias voltage is applied. Therefore, the extinction ratio varies non-linearly in general and sharply near the reverse bias voltages of 1-2 V.

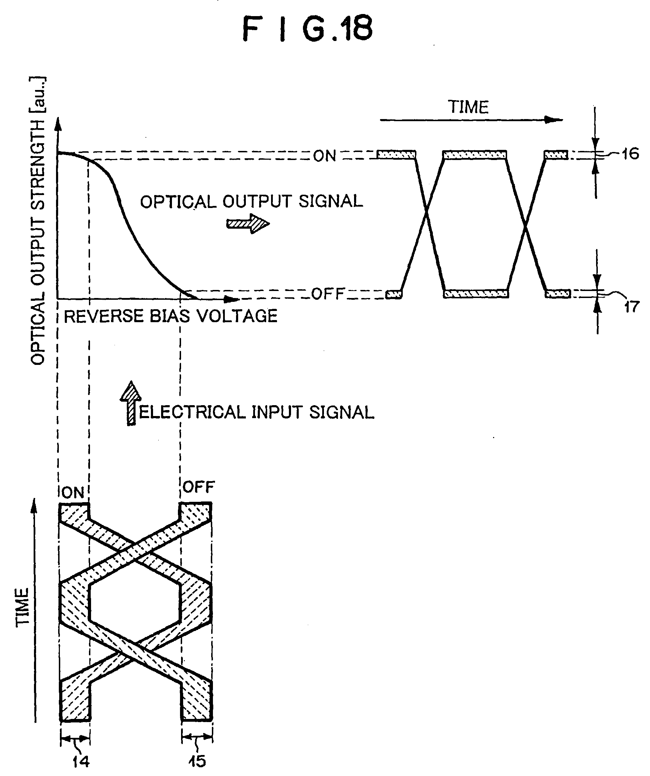

As shown in Fig. 18, such a non-linear extinction curve has an effect to reduce fluctuations in on- and off-levels of a waveform of an optical signal that is output from the modulator when an input voltage signal has fluctuations in on- and off-levels of its waveform. It can also make the rise and fall of the optical signal waveform faster than those of the input voltage signal waveform.

The EA optical modulator of the first prior art has a device capacity of about 1.2 pF and a 3dB bandwidth of about 4 GHz in a frequency response characteristic for small signals. Therefore, it can not be sufficiently applied to a faster optical communication at 5 Gb/s, 10 Gb/s or more.

In order to achieve a faster modulation, the following design is employed. First, the device length is shortened to reduce the device capacity. Second, the number of quantum wells is increased to increase lights confined in the quantum well absorption layer, for the purpose of compensating the extinction ratio reduced due to the shortened device length.

A second conventional EA optical modulator will be described next. It has-a shortened device length down to 150 µm that corresponds to 1/3 of that in the first EA modulator. In addition, the second EA modulator includes the increased number of quantum wells up to twelve that correspond to triple of that in the first EA modulator.

The second EA modulator is designed to increase the lights confined in the quantum well absorption layer, using increased quantum wells, for the purpose of compensating the extinction ratio that has been reduced due to the reduction of the device length. The second EA modulator improves the 3dB bandwidth up to about 12 GHz, while it maintains the extinction curve characteristic with a sufficient extinction ratio and a non-linearity suitable for the fast optical communication.

Inside the absorption layer, however, a gradient of the electric field strength depending on a background carrier concentration Ni is present in the direction of thickness. The gradient is represented by qNi/ε₀εᵣ, where q denotes an elementary charge; ε₀ the dielectric constant in vacuum; and εᵣ a relative dielectric constant of the medium. As a result, the phenomenon that electric field strengths applied to respective quantum wells in the MQW absorption layer differ from each other depending on respective locations of the quantum wells becomes pronounced.

Fig. 19A shows a structure of the MQW absorption layer in the second EA optical modulator. The MQW absorption layer includes an n-InGaAsP SCH layer 10 (PL wavelength 1.25 µm composition, thickness 50 nm, carrier concentration 1 × 10¹⁸ cm⁻³) and a p-InGaAsP SCH layer 11 (PL wavelength 1.25 µm composition, thickness 50 nm, carrier concentration 3 × 10¹⁷ cm⁻³). Twelve non-doped InGaAsP quantum well layers 12 (PL wavelength 1.58 µm composition, thickness 8 nm) and eleven non-doped InGaAsP barrier layers 13 (PL wavelength 1.25 µm composition, thickness 10 nm) are alternately grown between the layers 10 and 11. The non-doped layers have an n-type background carrier concentration of 3 × 10¹⁶ cm⁻³.

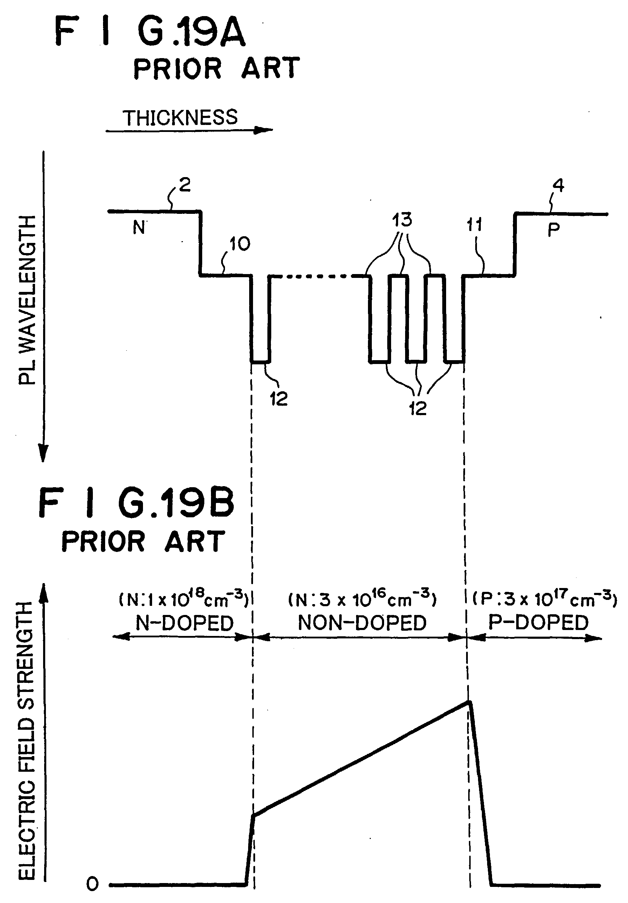

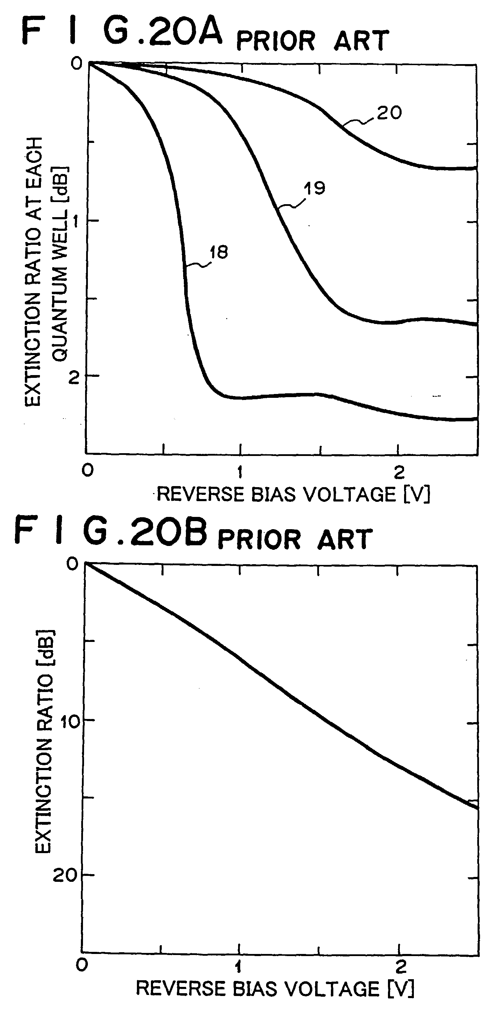

The second EA modulator has electric field strengths which greatly differ depending on the locations of the quantum wells as shown in Fig. 19B. The gradient of the electric field strength is about 440kV/cm/µm. As a result, extinction curves 18, 19, and 20 for respective quantum wells greatly differ from one another as shown in Fig. 20A. The extinction curve for the EA modulator which is obtained by summing them up exhibits a greatly degraded non-linearity as shown in Fig. 20B.

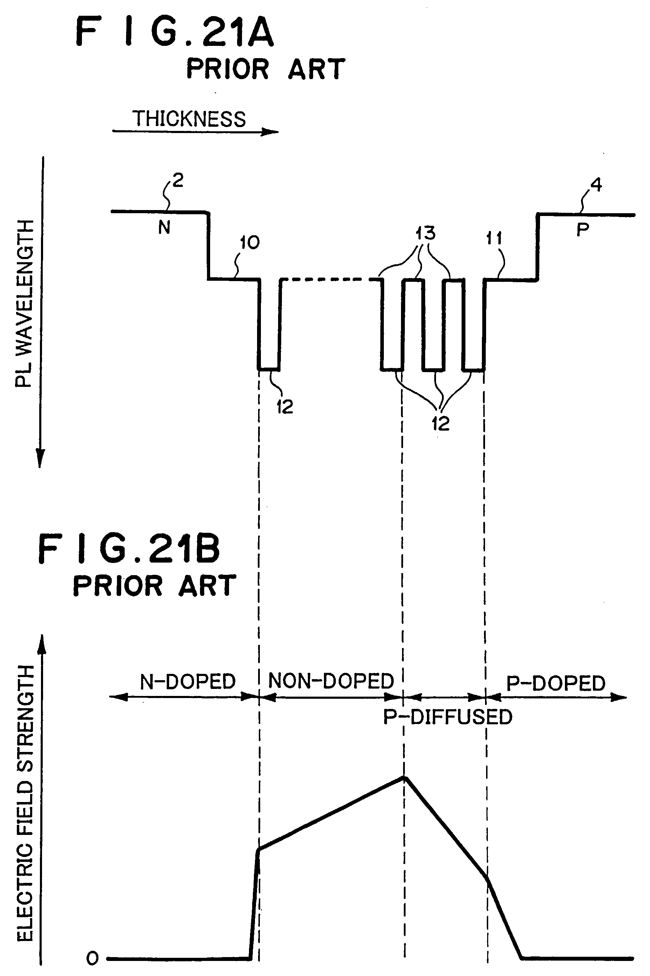

The MOVPE method is widely employed for crystal growth of the optical semiconductor device. In this method, atoms of Zn generally used as p-dopants are easily diffused during the crystal growth. When the doping concentration is increased in a side of the p-InP clad 4 for a purpose of reducing a voltage drop at the p-InP clad and reducing the pile-up of photo carriers generated from light absorption, atoms of Zn are diffused into the MQW absorption layer. This causes large differences among the electric field strengths depending on the locations of the quantum wells on the side of the p-InP clad 4 as shown in Fig. 21, and reduces the extinction ratio and the non-linearity of extinction curve.

### SUMMARY OF THE INVENTION

The present invention has been made to eliminate the above disadvantages and accordingly an object of the preferred embodiments is to provide an EA optical modulator with a large extinction ratio and an enhanced non-linear extinction curve notwithstanding the increase of the number of quantum wells or the increase of the concentration of carriers in absorption layer. The present invention also provides an optical modulation device or a modulator integrated optical semiconductor device suitable for a long-distance large-capacity optical transmission, a small optical transmission module having the device mounted thereon, and a fast optical transmission system using the device or the module.

According to a first aspect of the present invention, there is provided an optical semiconductor device, comprising: a semiconductor substrate; semi-conductor layers grown on the semiconductor substrate, the semiconductor layers comprising (or including) an absorption layer; the absorption layer comprising at least two quantum well layers; wherein the absorption layer is subjected to an electric field distribution at an application of a reverse bias voltage (or, when a reverse bias voltage is applied, the absorption layer is subjected to an electric field distribution), the electric field distribution being determined by a conductor type and carrier concentration of the absorption layer and a conductor type and carrier concentration of portions neighboring on the absorption layer; and wherein a quantum level light-emission wavelength at zero-bias voltage is shorter in a quantum well layer which is subjected to a strongest electric field among the quantum well layers constituting the absorption layer than in a quantum well layer which is subjected to a weakest electric field among the quantum well layers constituting the absorption layer.

In the optical semiconductor device, a quantum level light-emission wavelength at zero-bias voltage may be shorter in a quantum well layer which is subjected to a stronger electric field among the quantum well layers constituting the absorption layer than in a quantum well layer which is subjected to a weaker electric field among the quantum well layers constituting the absorption layer.

In the optical semiconductor device, there may be at least two types of the quantum well layers constituting the absorption layer, one type being different from another type in thickness.

In the optical semiconductor device, there may be at least two types of the quantum well layers constituting the absorption layer, one type being different from another type in composition.

In the optical semiconductor device, the absorption layer may comprise at least three quantum well layers and at least two barrier layers each disposed between two of the quantum well layers; and there may be at least two types of the barrier layers constituting the absorption layer, one type being different from another type in composition.

According to a second aspect of the present invention, there is provided a monolithic optical semiconductor device comprising: the optical semiconductor device; and an optical semiconductor device which is mounted on the semiconductor substrate and different from the optical semiconductor device according to the one of claims 1 to 5 in quantum level light-emission wavelength at zero-bias voltage.

According to a third aspect of the present invention, there is provided an optical communication module, comprising: the optical semiconductor device; wave-guiding means for wave-guiding a light output from the optical semiconductor device to external; a mechanism for having the light enter the wave-guiding means; and an electric interface for driving the optical semiconductor device.

According to a fourth aspect of the present invention, there is provided an optical communication module, comprising: the monolithic optical semiconductor device; wave-guiding means for wave-guiding a light output from the monolithic optical semiconductor device to external; a mechanism for having the light enter the wave-guiding means; and an electric interface for driving the monolithic optical semiconductor device.

According to a fifth aspect of the present invention, there is provided an optical communication system, comprising: a transmitter which comprises the optical semiconductor device and transmits a light; and a receiver which receives the light.

According to a sixth aspect of the present invention, there is provided an optical communication system, comprising: a transmitter which comprises the monolithic optical semiconductor device and transmits a light; and a receiver which receives the light.

### BRIEF DESCRIPTION OF THE DRAWINGS

Preferred features of the present invention will now be described, by way of example only, with reference to the accompanying drawings, in which:-
Figs. 1A and 1B shows a first embodiment of the present invention;
Fig. 2 shows an example of the first embodiment of the present invention;
Figs. 3A and 3B show another example of the first embodiment of the present invention;
Figs. 4A and 4B show a further example of the first embodiment of the present invention;
Figs. 5A and5B show a second embodiment of the present invention;
Fig. 6 shows an example of the second embodiment of the present invention;
Figs. 7A and 7B show another example of the second embodiment of the present invention;
Fig. 8 shows a further example of the second embodiment of the present invention;
Fig. 9 shows an application of the present invention;
Fig. 10 shows an application of the present invention;
Figs. 11A and 11B show a third embodiment of the present invention;
Fig. 12 shows an example of the third embodiment of the present invention;
Figs. 13A and 13B show another example of the third embodiment of the present invention;
Fig. 14 shows a further example of the third embodiment of the present invention;
Fig. 15 shows a conventional example;
Fig. 16 shows another conventional example;
Fig. 17 shows a still another conventional example;
Fig. 18 shows an effect of a large non-linear extinction curve of the conventional example;
Figs. 19A and 19B show further conventional example;
Figs. 20A and 20B show still further conventional example; and
Figs. 21A and 21B show a conventional example in the case Zn-diffuses in an MQW absorption layer.

### DETAILED DESCRIPTION OF THE PREFERRED EMBODIMENTS

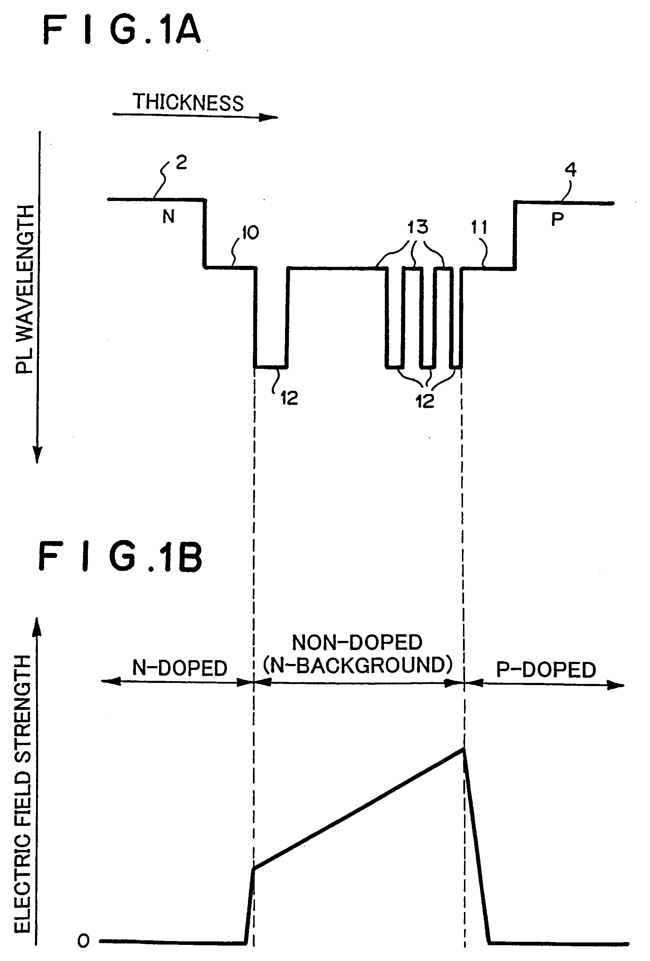

Fig. 1A shows a structure of an MQW absorption layer, conceptually illustrated with PL wavelengths, in an optical semiconductor device according to a first embodiment of the present invention. Corresponding to an electric field strength distribution at a reverse bias voltage application as shown in Fig. 1B, quantum wells in the MQW absorption layer are determined to have thicknesses different from one another. As a result, a quantum level light-emission wavelength at zero-bias voltage is shorter in a quantum well located in a stronger electric field than in a quantum well located in a weaker electric field.

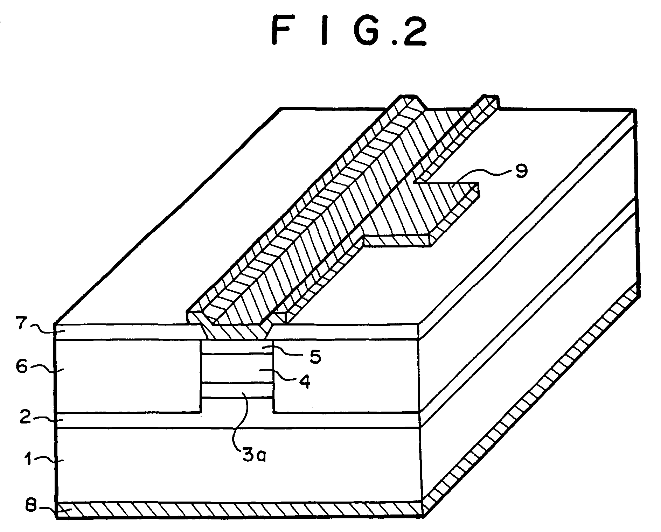

Fig. 2 shows a first example of a device structure of an EA optical modulator for 1.55 µm band according to the first embodiment of the present invention.

In this EA modulator comprises, grown on an n-InP substrate 1 are an n-InP clad layer 2 (thickness 0.2 µm, Si-doping concentration 1 × 10¹⁸ cm⁻³), an MQW absorption layer 3a according to the embodiment, a p-InP clad layer 4 (thickness 1.5 µm, Zn-doping concentration 3 × 10¹⁷ cm⁻³), and a p-InGaAs cap layer 5 (thickness 0.3 µm, Zn-doping concentration 2 × 10¹⁹ cm⁻³). A mesa stripe with a width of 1.6 µm and a height of 2.5 µm is formed by etching for lateral mode control and is buried within an Fe-doped InP semi-insulator 6. Reference 6,7, 8, and 9 represent a semi-insulator type InP buried layer, an insulator layer, an n-electrode, and a p-electrode, respectively.

This EA modulator is designed for an optical signal wavelength of 1.550 µm and has a device length of 150 µm. Non-reflective coatings of SiN are applied on both end surfaces (not depicted).

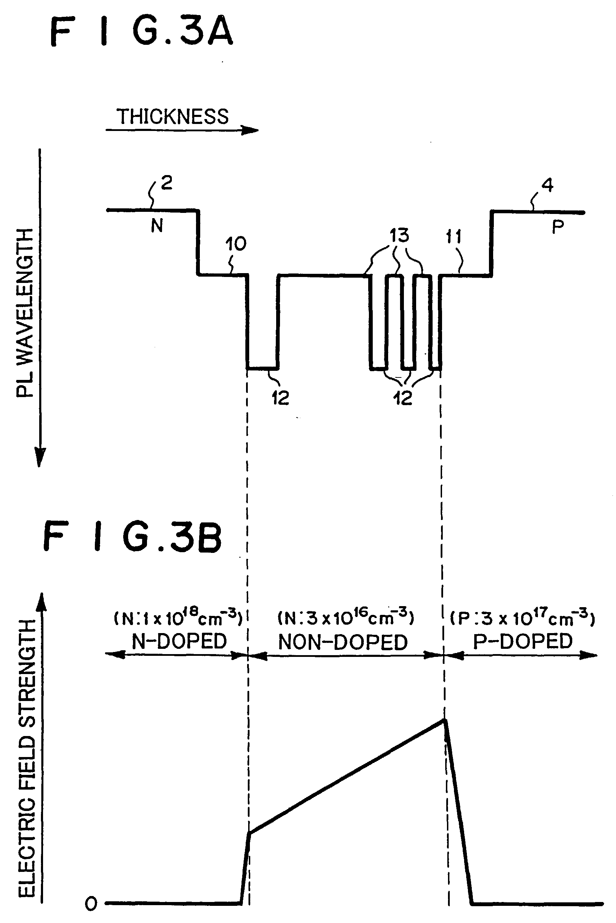

Fig. 3A shows a structure of the above MQW absorption layer with PL wavelengths. The MQW absorption layer includes an n-InGaAsP SCH layer 10 (PL wavelength 1.25 µm composition, thickness 50 nm, carrier concentration 1 × 10¹⁸ cm⁻³) and a p-InGaAsP SCH layer 11 (PL wavelength 1.25 µm composition, thickness 50 nm). Twelve non-doped InGaAsP quantum well layers 12 (PL wavelength 1.58 µm composition, thicknesses 8.7-5.7 nm) and eleven non-doped InGaAsP barrier layers 13 (PL wavelength 1.25 µm composition, thickness 10 nm) are alternately grown between the layers 10 and 11.

The non-doped layers have an n-type background carrier concentration of 3 × 10¹⁶ cm⁻³ and exhibits an electric field strength distribution at a reverse bias voltage application as shown in Fig. 3B. Corresponding to such an electric field strength distribution, the InGaAsP quantum well layers 12 are controlled to have different thicknesses decreasing from 8.7 nm at the n-InP clad layer 2 in the weaker electric field strength down to 5.7 nm at the p-InP clad layer 4 in a stronger electric field strength.

In accordance with the above thickness variation of the quantum well layers 12, quantum level light emission wavelengths at zero-bias voltage distribute from 1.51 µm in the thickest quantum well layer 12 on the side of the n-InP clad layer 2 down to 1.47 µm in the thinnest quantum well layer 12 on the side of the p-InP clad layer 4. Therefore, the detuning distributes from 40 nm to 80 nm for a light of a wavelength of 1.550 µm that enters the modulator.

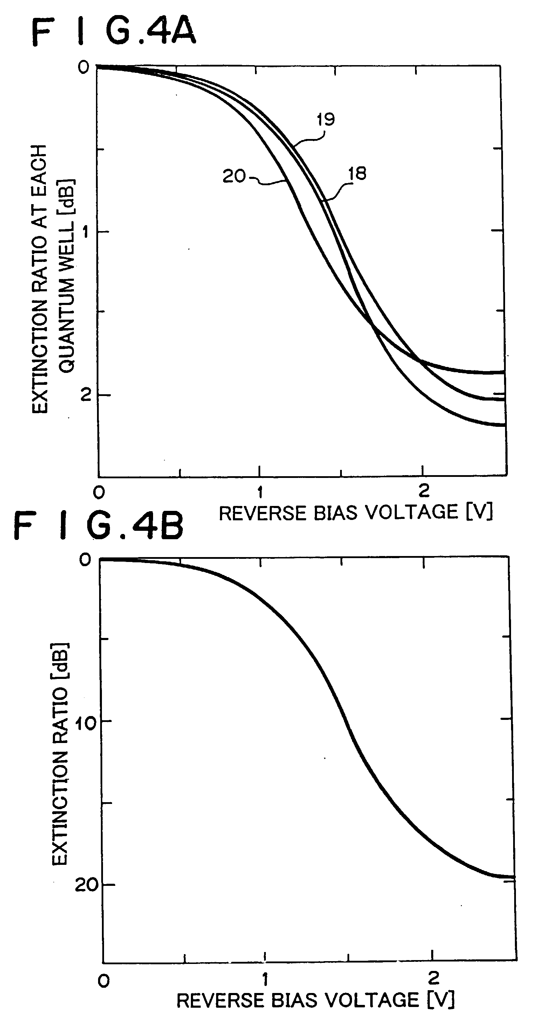

The variation of the detuning corresponding to the electric field strength distribution unifies the extinction curves of respective quantum wells for the applied reverse bias voltage as shown in Fig. 4A, maintaining an enhanced non-linear extinction curve inherently present in a single quantum well. Thus, an EA optical modulator can be realized to have a large extinction ratio and an extinction curve with an enhanced non-linearity as shown in Fig. 4B.

In the above embodiment, the thickness is varied for the unstrained quantum well layer that employs InGaAsP of PL wavelength of 1.58 µm composition matched in lattice with the InP substrate. Alternately, a strained MQW structure, which introduces a lattice strain into a quantum well layer or a barrier layer, may also be employed. The quantum well layer as well as the barrier layer may have any combination of composition, strain and thickness, which are not limited to this embodiment.

Materials for realizing the MQW structure of the EA modulator are not limited to InGaAsP well/InGaAsP barrier layers of the above example. But, any material such as InGaAs well/InGaAsP barrier layers, InGaAsP well/InAlGaAs barrier layers, and InGaAs well/InAlGaAs barrier layers may also be employed as long as the material realizes the MQW structure of the EA optical modulator.

The wavelength of an optical signal that is introduced into the EA modulator is not limited to 1.550 µm. Any wavelength band of an optical signal used in optical communications, such as 1.55 µm, 1.58 µm, 1.3 µm and 1.4 µm wavelength bands, may also be employed. For these wavelengths, the MQW structure can be designed to obtain a distribution of quantum level light-emission wavelengths at zero-bias voltage that corresponds to the doping profile and electric field strength distribution of the EA modulator.

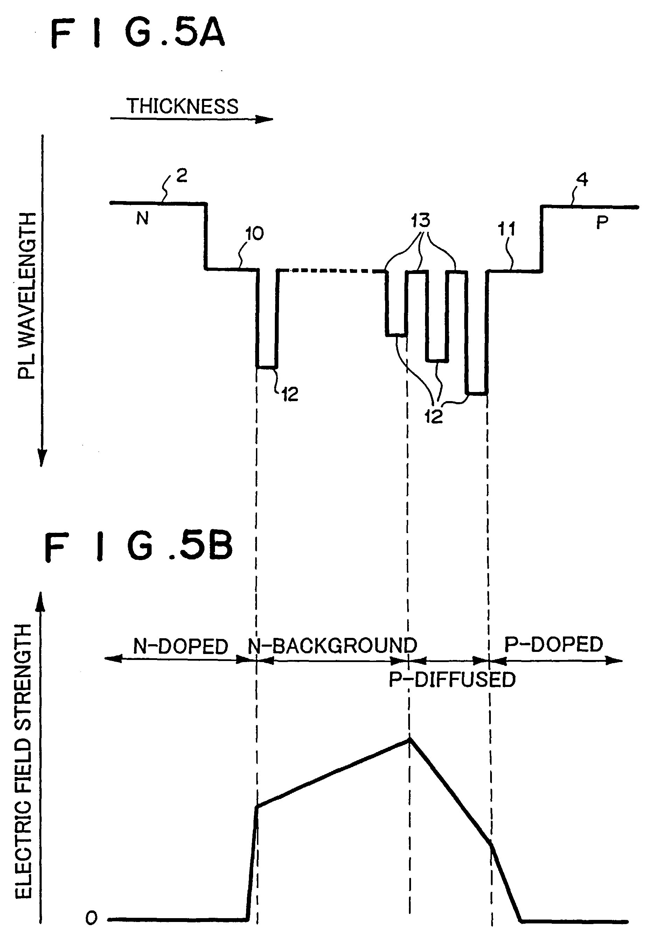

Fig. 5 shows a structure of an MQW absorption layer, conceptually illustrated with PL wavelengths, in an optical semiconductor device according to a second embodiment of the present invention. Corresponding to an electric field strength distribution at a reverse bias voltage application, quantum wells in the MQW absorption layer are controlled to have different compositions. As a result, a quantum level light-emission wavelength at zero-bias voltage is shorter in a quantum well located in a stronger electric field than in a quantum well located in a weaker electric field.

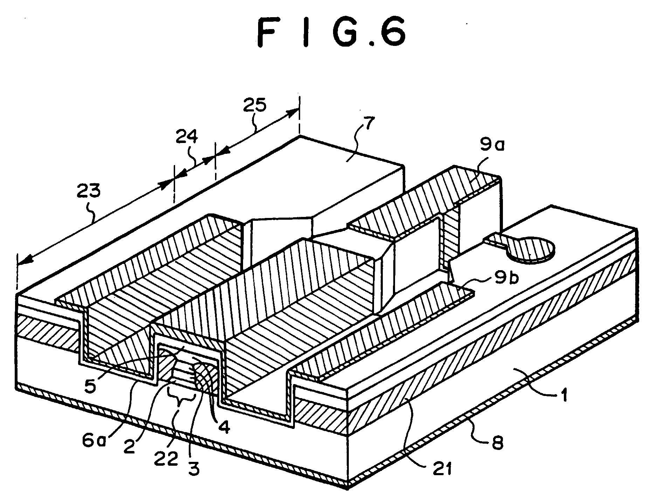

Fig. 6 shows a second example of a device structure of an EA optical modulator integrated DFB-LD for 1.58 µm band according to the second embodiment.

An n-InP substrate 1 is prepared to have gratings 12 partially formed thereon. An optical waveguide mesa stripe 22 includes a DFB-LD active layer and an MQW absorption layer according to the second embodiment. The optical waveguide mesa stripe 22 is formed on the substrate 1 using the selective growth MOVPE technology. Then, a semi-insulating Fe-doped InP current block layer 6a is grown, and a p-InP clad layer 4 (thickness 1.6 µm, Zn-doping concentration 1 × 10¹⁸ cm⁻³) and a p-InGaAs cap layer 5 (thickness 0.3 µm, Zn-doping concentration 2 × 10¹⁹ cm⁻³) are grown in a buried manner. References 7, 8, 9a, and 9b represent an insulator, n-side electrode, p-electrode in EA optical modulator 25, and p-electrode in DFB-LD 23, respectively.

The EA optical modulator integrated DFB-LD comprises a 400 µm long DFB-LD 23 (oscillation wavelength 1.580 µm), a 50 µm long electrical isolator 24 and a 200 µm long EA optical modulator 25. High reflective coating (not depicted) consisting of multi-layered amorphous Si and Al₂O₃ is applied on the end surface on a side of the DFB-LD 23. Non-reflective coating (not depicted) consisting of SiN is applied on the end surface on a side of the modulator 25.

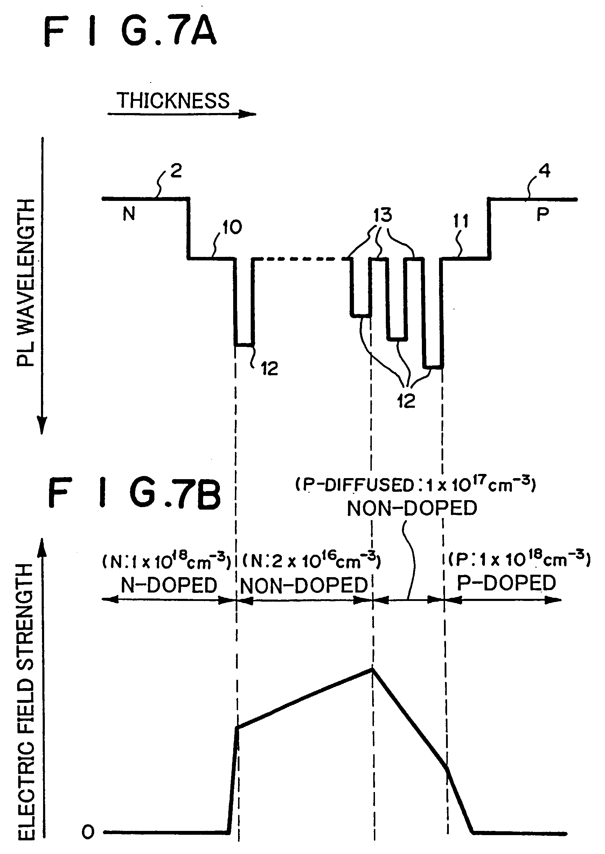

Fig. 7A shows a structure of the MQW absorption layer, conceptually illustrated with PL wavelengths, in the above modulator. The MQW absorption layer includes an n-InGaAsP SCH layer 10 (PL wavelength 1.20 µm composition, thickness 80 nm, carrier concentration 1 × 10¹⁸ cm⁻³) and a p-InGaAsP SCH layer 11 (PL wavelength 1.25 µm composition, thickness 50 nm). Eight non-doped InGaAsP quantum well layers 12(compressive strain 0.5 %, thickness 7 nm) and seven non-doped InGaAsP barrier layers 13 (PL wavelength 1.20 µm composition, tensile strain 0.2 %, thickness 10 nm) are alternately grown between the layers 10 and 11.

The MQW absorption layer has an n-type background carrier concentration of 2 × 10¹⁶ cm⁻³ when the optical waveguide mesa stripe initially is formed. During the formation of the p-InP clad with a relatively high doping concentration of 1 × 10¹⁸ cm⁻³, Zn is diffused at a concentration of 1 × 10¹⁷ cm⁻³ to reach the third quantum well counted from the p-InP clad as shown in Fig. 7. As a result, the MQW absorption layer finally has such a doping profile that indicates an electric field strength distribution at a reverse bias voltage application as shown in Fig. 7B.

Corresponding to the electric field strength distribution, among the InGaAsP quantum well layers 12, the third quantum well counted from the p-InP clad and located in the strongest electric field strength is determined to have a PL wavelength 1.52 µm composition. The intermediate quantum wells located in weaker electric field strengths are determined to have gradually longer PL wavelength compositions. The first quantum well counted from the p-InP clad 4 and located in the weakest electric field strength is determined to have a PL wavelength 1.555 µm composition.

The above composition variation in the quantum wells distributes the quantum level light-emission wavelengths at zero-bias voltage from 1.51 µm for the quantum well in the strongest electric field strength to 1.54 µm for the quantum well in the weakest electric field strength. It also distributes the detuning from 70 nm to 40 nm for an oscillation wavelength of 1.58 µm at the DFB-LD.

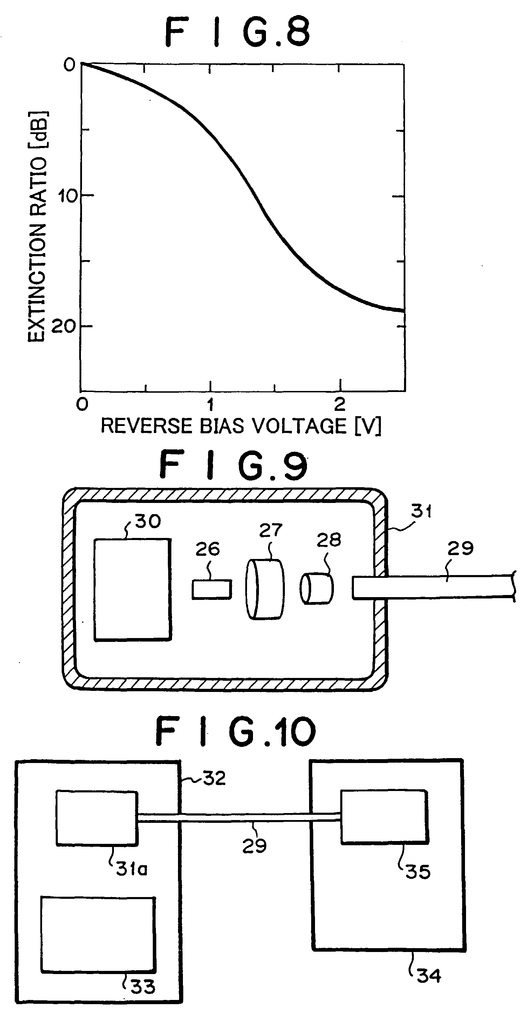

The detuning variation corresponding to the electric field strength distribution can unify the extinction curves of the quantum wells at the reverse bias voltage application. Thus, an EA optical modulator integrated DFB-LD suitable for fast optical communications can be realized to have a large extinction ratio and an extinction curve with an enhanced non-linearity as shown in Fig. 8.

The compressive strains of the quantum wells are kept constant (0.5 %) when varying the PL wavelength compositions in the quantum wells in the above example. Alternately, the compressive strains may be changed to vary the quantum level light emission wavelengths at zero-bias voltage in quantum well layers. Further, both of the PL wavelength compositions and compressive strains of the quantum wells may be changed. The materials of the MQW absorption layer and the oscillation wavelength of the DFB-LD are not limited in this embodiment as the first example explaining the first embodiment.

Fig. 9 shows a transmission module 31 for optical communications as a third example. In this module, the EA optical modulator integrated DFB-LD 26 of the first example is fixed so that a light emitted therefrom enters into an optical fiber 29 via a non-spherical lens 27 and an optical isolator 28. Further included in this module is an electrical interface 30 for driving the EA optical modulator integrated DFB LD 26. This module easily generates a fast optical transmission signal that has a fast rise and a fast fall, a large extinction ratio and a low chirping characteristic.

Fig. 10 shows an optical communication system as a fourth example. The optical communication system comprises the optical transmission module 31a as the third example. An optical transmitter 32 includes the module 31a along with a driver 33 for driving the module 31a. An optical signal output from the transmitter 32 is transmitted via an optical fiber 29 and is detected at a receiver module 35 inside a receiver 34.

The above optical communication system can easily achieve a fast optical communication at 2.5 Gb/s or 10 Gb/s or more because the optical output from the optical transmission module has an excellent optical transmission waveform with a fast rise and a fast fall, a large extinction ratio and a low chirping characteristic.

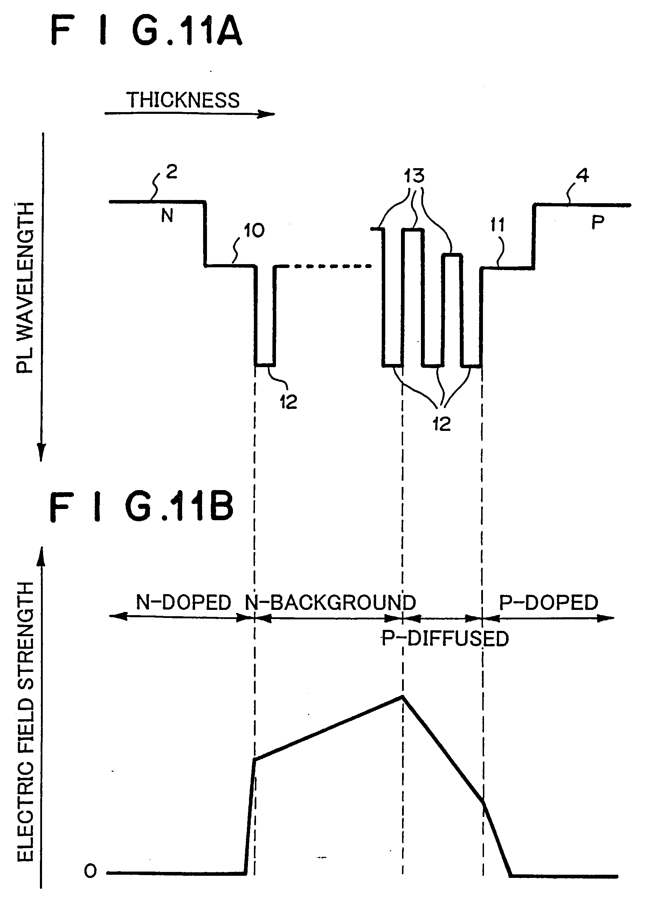

Fig. 11 shows a structure of an MQW absorption layer, conceptually illustrated with PL wavelengths, in an optical semiconductor device according to a third embodiment of the present invention. Corresponding to an electric field strength distribution at a reverse bias voltage application, barrier layers in the MQW absorption layer are controlled to have different compositions. As a result, a quantum level light-emission wavelength at zero-bias voltage is shorter in a quantum well located in a stronger electric field than in a quantum well located in a weaker electric field.

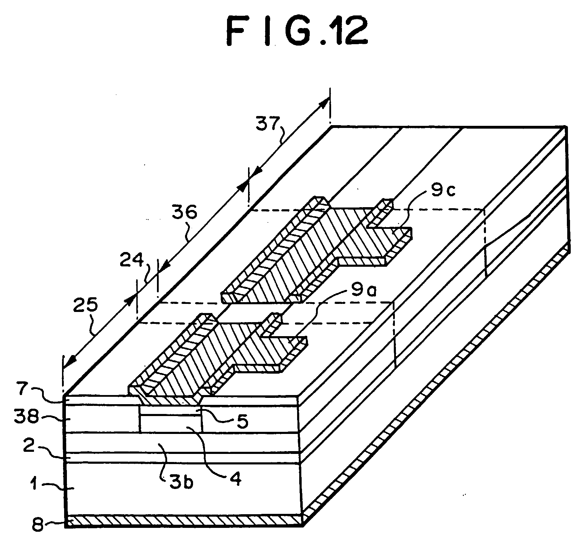

Fig. 12 shows a device structure of an SSC-SOA (spot-size converter integrated semiconductor optical amplifier) integrated EA optical modulator for a band of 1.55 µm wavelength as a fifth example for explaining the third embodiment.

A tapered spot-size converter (SSC) 37, a semiconductor optical amplifier (SOA) 36 and an EA optical modulator 25 are formed on an InP substrate 1 in a butt-joint structure through individual crystal growth processes using the selective growth MOVPE technology.

Adopted as waveguide structure is a ridge waveguide structure in which a p-InP clad layer 4 (thickness 4.5 µm, Zn-doping concentration 5 × 10¹⁷ cm⁻³) and a p-InGaAs cap layer 5 (thickness 0.3 µm, Zn-doping concentration 2 × 10¹⁹ cm⁻³) are etched in a mesa shape. This waveguide stripe has a 7-degree off-angle from the normal at the optical input/output edge surfaces to form an inclined edge structure effective for reducing the reflectance ratio.

The SSC-SOA integrated EA optical modulator comprises a 200 µm long SSC 37, a 250 µm long SOA 36, a 40 µm long electrical isolation 24 and a 150 µm long EA optical modulator 25. Polyimide 38 is employed to level off the device and non-reflective coatings of SiN (not depicted) are applied on the end surface where a light emits.

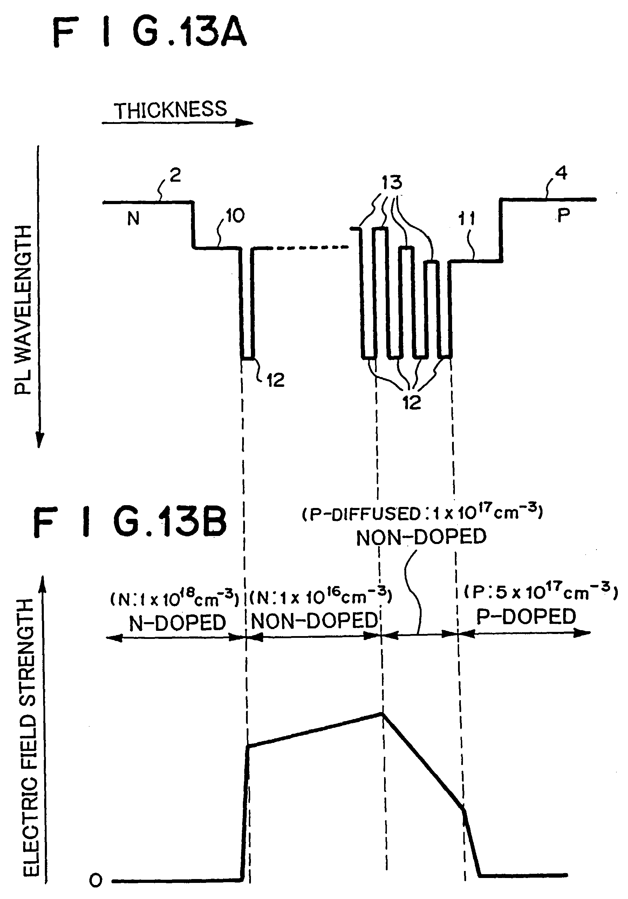

Fig. 13A shows a structure of the MQW absorption layer, conceptually illustrated with PL wavelengths, in the EA modulator. The MQW absorption layer includes an n-InAlGaAs SCH layer 10 (PL wavelength 1.13 µm composition, thickness 80 nm, carrier concentration 1 × 10¹⁸ cm⁻³) and a p-InAlGaAs SCH layer 11 (PL wavelength 1.35 µm composition, thickness 50 nm). Ten non-doped InGaAsP quantum well layers 12 (PL wavelength 1.58 µm composition, non-strain, thickness 8 nm) and nine non-doped InAlGaAs barrier layers 13 (non-strain, thickness 8 nm) are alternately grown between the layers 10 and 11.

The non-doped layers initially have an n-type background carrier concentration of 2 × 10¹⁶ cm⁻³. During the formation of the p-InP clad up to a relatively large thickness of 4.5 µm, Zn is diffused at a concentration of 1 × 10¹⁷ cm⁻³ to reach the fourth quantum well counted from the p-InP clad as shown in Fig. 13. As a result, the non-doped layers finally have a doping profile that indicates such an electric field strength distribution at a reverse bias voltage application as shown in Fig. 13B.

Corresponding to the electric field strength distribution, in the MQW absorption layer 3b, the InAlGaAs barrier layer 13 adjacent to the fourth quantum well, which is counted from the p-InP clad and located in the strongest electric field strength, is determined to have a PL wavelength 1.05 µm composition. The barrier layers adjacent to the quantum wells located in weaker electric field strengths are determined to have gradually longer PL wavelength compositions. The InAlGaAs barrier layer 13 adjacent to the first quantum well, which counted from the p-InP clad 4 and located in the weakest electric field strength, is determined to have a PL wavelength 1.15 µm composition.

The above composition variation in the barrier layers distributes the quantum level light-emission wavelengths at zero-bias voltage from 1.46 µm for the quantum well in the strongest electric field strength to 1.49 µm for the quantum well in the weakest electric field strength. It also distributes the detuning from 40 nm to 70 nm for an optical signal wavelength of 1.530 µm that enters the SSC-SOA integrated EA optical modulator.

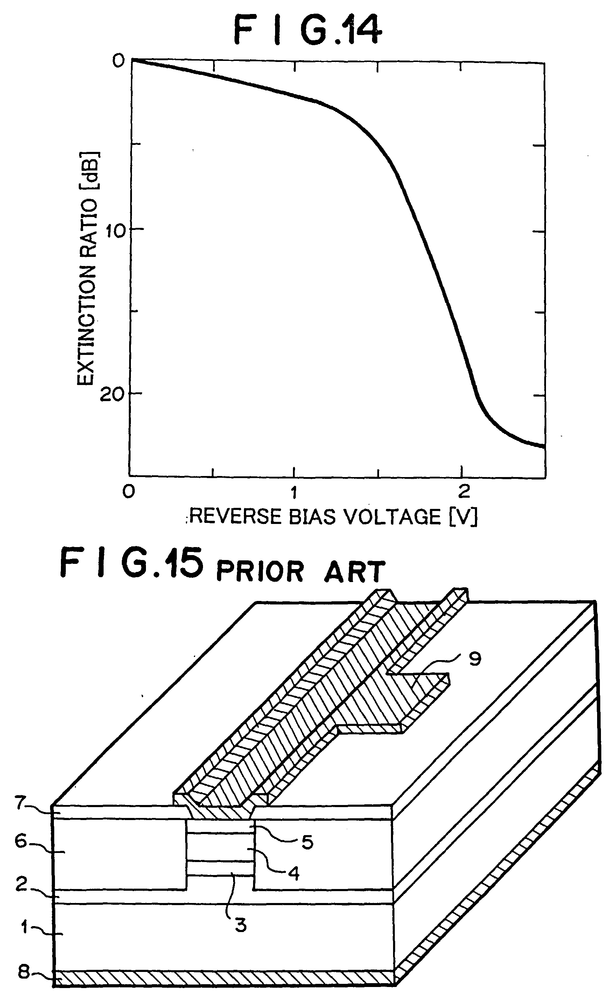

The detuning variation corresponding to the electric field strength distribution can unify the extinction curves of the quantum wells at the reverse bias voltage application. Thus, an SSC-SOA integrated EA optical modulator suitable for fast optical communications can be realized to have a large extinction ratio and an extinction curve with an enhanced non-linearity as shown in Fig. 14.

No strains are present in barrier layers when varying the PL wavelength compositions in the barrier layers in the above example. Alternatively, strains of the barrier layers may be changed to vary the quantum level light-emission wavelengths at zero-bias voltage in the quantum well layers. Further, both of the PL wavelength compositions and the strains of the barrier layers may be changed. The materials of the MQW absorption layer and the oscillation wavelength of the DFB-LD are not limited in this embodiment as the first example explaining the first embodiment and the second example explaining the second embodiment.

In order to vary the quantum level light-emission wavelength at zero-bias voltage in the quantum well layer, the quantum well layer thickness, quantum well layer composition and barrier layer composition in the MQW absorption layer are independently varied in the foregoing embodiments. Alternatively, two or all of them may also be varied at the same time in order to vary the quantum level light-emission wavelength at zero-bias voltage in the quantum well layer.

The examples of the present invention were an EA optical modulator, an EA optical modulator integrated DFB-LD, an SSC-SOA integrated EA optical modulator, an optical transmission module, and optical communication system in the above. However, the method for varying a quantum level light-emission wavelength at zero-bias voltage in the above examples are not limited to the above examples, but are applicable to any optical semiconductor device having an MQW well, any optical communication module having the device, and any optical communication system having the device.

The materials, the conduction types of the substrate (n-type, p-type and semi-insulating), the crystal growth methods, the optical waveguide structures, and the buried structures for the optical semiconductor device are not limited to the above examples. For example, an MOVPE method and an MBE method may be employed for crystal growth; a mesa stripe structure and a ridge waveguide structure for an optical waveguide structure; and a high resistance buried structure, a pnpn current block structure, and a homo-buried structure for a buried structure in order to apply the present invention to a optical semiconductor device having an MQW absorption layer, an optical communication module having the device, and an optical communication system having the device.

According to the present invention, even when the uniformity of a distribution of electric fields in an MQW absorption layer deteriorates because of the increase of the number of quantum wells and/or the increase of carrier concentration in the MQW absorption layer for an EA optical modulator, it is possible, by controlling detuning, which is a difference between a wavelength of an optical signal and a quantum level light-emission wavelength at zero-bias voltage, in correspondence with a distribution of electric fields in quantum wells, to unify extinction curves of respective quantum wells to maintain the extinction curves, having an enhanced non-linearity, of respective quantum wells when an reverse bias voltage is applied. Therefore, an EA optical modulator having a large extinction rate and an enhanced non-linearity of an extinction curve is realized. Hence, it is possible to provide an optical modulator device and optical modulator integrated semiconductor optical device which are suitable for a long distance/large capacity optical transmission, a compact optical communication module mounting such devices, and a high-speed otpical communication apparatus having such devices or such module.

Having described the embodiments consistent with the present invention, other embodiments and variations consistent with the present invention will be apparent to those skilled in the art. Therefore, the invention should not be viewed as limited to the disclosed embodiments but rather should be viewed as limited only by the scope of the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

In an electro-absorption (EA) type of optical modulator using a variation of a quantum level light-emission wavelength caused by an application of an electric field to an absorption layer having a multiple quantum well (MQW) structure, quantum well layers in the MQW absorption layer are varied in thickness or in composition to make a quantum level light-emission wavelength at zero-bias voltage be shorter in a quantum well located in a portion subjected to a weak electric field. This structure unifies extinction curves of quantum wells when a reverse bias voltage is applied to them in order to maintain the enhanced non-linearity of the extinction curve which a single quantum well originally has, and accordingly realizes an EA optical modulator which has a large extinction ratio and an extinction curve with an enhanced non-linearity.

## Claims

1. An optical semiconductor device, comprising:
a semiconductor substrate;
semiconductor layers grown on said semiconductor substrate, said semiconductor layers comprising an absorption layer, said absorption layer comprising at least two quantum well layers;
wherein said absorption layer is subjected to an electric field distribution at an application of a reverse bias voltage, said electric field distribution being determined by a conductor type and carrier concentration of said absorption layer and a conductor type and carrier concentration of portions neighboring on said absorption layer; and,
wherein a quantum level light-emission wavelength at zero-bias voltage is shorter in a quantum well layer which is subjected to a strongest electric field among the quantum well layers constituting said absorption layer than in a quantum well layer which is subjected to a weakest electric field among the quantum well layers constituting said absorption layer.

2. The optical semiconductor device according to claim 1,
wherein a quantum level light-emission wavelength at zero-bias voltage is shorter in a quantum well layer which is subjected to a stronger electric field among the quantum well layers constituting said absorption layer than in a quantum well layer which is subjected to a weaker electric field among the quantum well layers constituting said absorption layer.

3. The optical semiconductor device according to claim 2,
wherein there are at least two types of the quantum well layers constituting said absorption layer, one type being different from another type in thickness.

4. The optical semiconductor device according to claim 2,
wherein there are at least two types of the quantum well layers constituting said absorption layer, one type being different from another type in composition.

5. The optical semiconductor device according to claim 2,
wherein said absorption layer comprises at least three quantum well layers and at least two barrier layers each disposed between two of the quantum well layers; and
wherein there are at least two types of the barrier layers constituting said absorption layer, one type being different from another type in composition.

6. A monolithic optical semiconductor device comprising:
the optical semiconductor device according to any one of claims 1 to 5; and
an optical semiconductor device which is mounted on said semiconductor substrate and different from the optical semiconductor device according to said one of claims 1 to 5 in quantum level light-emission wavelength at zero-bias voltage.

7. An optical communication module, comprising:
the optical semiconductor device according to any one of claims 1 to 5;
wave-guiding means for wave-guiding to the outside a light output from the optical semiconductor device according to said one of claims 1 to 5;
a mechanism for having said light enter said wave guiding means; and
an electric interface for driving the optical semiconductor device according to said one of claims 1 to 5.

8. An optical communication module, comprising:
the monolithic optical semiconductor device according to claim 6;
wave-guiding means for wave-guiding to the outside a light output from the monolithic optical semiconductor device according to claim 6;
a mechanism for having said light enter said wave-guiding means; and
an electric interface for driving the monolithic optical semiconductor device according to claim 6.

9. An optical communication system, comprising:
a transmitter which comprises the optical semiconductor device according to any one of claims 1 to 5, for transmitting light; and,
a receiver for receiving said light.

10. An optical communication system, comprising:
a transmitter which comprises the monolithic optical semiconductor device according to claim 6 for transmitting light; and,
a receiver for receiving said light.

11. An optical semiconductor device, comprising:
a semiconductor substrate;
semiconductor layers grown on said semiconductor substrate, said semiconductor layers comprising an absorption layer, said absorption layer comprising at least two quantum well layers;
wherein said absorption layer is subjected to an electric field distribution at an application of a reverse bias voltage, said electric field distribution being determined by a conductor type and carrier concentration of said absorption layer and a conductor type and carrier concentration of portions neighbhouring on said absorption layer; and,
wherein a quantum level light-emission wavelength at zero-bias voltage is shorter in a quantum well layer which is subjected to a stronger electric field among the quantum well layers constituting said absorption layer than in a quantum well layer which is subjected to a weaker electric field among the quantum well layers constituting said absorption layer.

12. A method of forming an optical semiconductor device adapted to modulate a drive current, the method comprising the steps of:
providing a semiconductor substrate;
growing semiconductor layers on said semiconductor substrate, the layers including an absorption layer comprising at least two quantum well layers, such that on application of a zero-bias voltage a quantum level light-emission wavelength is shorter in a quantum well layer which is subjected to a strongest electric field that in a quantum well layer that is subjected to a weakest electric field.
